# EUROPEAN PATENT APPLICATION

(11) **EP 4 443 130 A1**
(43) Date of publication of application: **09.10.2024**
(21) Application number: 22901860.1
(22) Date of filing: 02.12.2022
(51) Int. Cl.: G01N 3/58, G06N 20/00, B23Q 17/09

(54) **DEVICE FOR DETECTING DAMAGE AND ABRASION OF TOOL IN ADAPTATIVE CONTROL OF TRANSFER RATE OF CNC MACHINE-TOOL AND METHOD FOR SAME**

(30) Priority: 03.12.2021 KR 20210171707
(71) Applicant: Lee, Hi Koan, Jeonju-si, Jeollabuk-do 55126 (KR)
(72) Inventor: HEO, Eun Young, Jeonju-si Jeollabuk-do 54861 (KR); LEE, Hi Koan, Jeonju-si Jeollabuk-do 55126 (KR)
(74) Representative: Isarpatent
(86) International application number: PCT/KR2022/019459
(87) International publication number: WO 2023/101502

(57) **Abstract**

Provided are a device for detecting damage and abrasion of a tool in adaptative control of a transfer rate of a CNC machine-tool and a method for same. The method for detecting damage and abrasion of a tool in adaptative control of a transfer rate of the CNC machine-tool according to an embodiment of the present invention comprises the steps of: detecting machining load data with respect to the CNC machine-tool by an edge device; calculating reference data by machine learning in consideration of a tool lifespan on the basis of data obtained by performing high-quality processing among machining load data detected by the edge device; and comparing the reference data with the machining load data detected during adaptative control-based processing to detect the damage and abrasion of the tool if a period of time which exceeds or falls short of the reference data lasts.

## Description

### Technical Field

The present invention relates to a device and a method for detecting tool fracture and tool wear in adaptative control of a feed rate of a CNC machine-tool, and more specifically, to a device and a method for detecting tool fracture and tool wear in adaptative control of a feed rate of a CNC machine-tool, which can detect tool fracture and tool wear in real time even during an adaptative control of a feed rate of a CNC machine-tool by calculating reference data through machine learning of machining load data during high-quality machining.

### Background Art

In general, in computer numerical controller (CNC) machining processes such as milling and turning, a spindle motor supplies the rotational force (torque) necessary for a cutting tool to remove a workpiece material, and as a reaction to the above, a machining load is generated as the resistance of the workpiece against the cutting tool. In this instance, the magnitude of the machining load can be measured by the amount of current entering the spindle motor, and the amount of current correlates proportionally with the size of machining load.

If the size of machining load is large, it is determined that resistance of the workpiece to cutting is increased. The increase in resistance of the workpiece is caused by wear on the cutting edge of the cutting tool or enhanced physical properties of the workpiece. Conversely, if the size of machining load is small, it is determined that resistance of the workpiece to cutting is decreased. The decrease in resistance of the workpiece is caused by a sharp cutting edge of the cutting tool or weakened physical properties of the workpiece.

The above situations frequently occur in parts manufactured from different composite materials or parts manufactured through post-machining of primary materials by a lower precision molding process, such as forging and casting. Thus, various solutions to improve productivity and machining quality in CNC machining by applying an adaptative control of a feed rate have emerged.

However, since the feed rate is changed in real time, tool fracture and tool wear cannot be detected during the adaptative control of the feed rate.

### Disclosure

### Technical Problem

Accordingly, the present invention has been made in view of the above-mentioned problems occurring in the related art, and it is an object of the present invention to provide a device and a method for detecting tool fracture and tool wear in adaptative control of a feed rate of a CNC machine-tool, which can detect tool fracture and tool wear in real time even during an adaptative control of a feed rate of a CNC machine-tool by calculating reference data through machine learning of machining load data during high-quality machining.

### Technical Solution

To accomplish the above-mentioned objects, according to the present invention, there is provided a device for detecting tool fracture and tool wear in adaptative control of feed rate of a CNC machine-tool, including: an edge device for detecting machining load data of the CNC machine-tool; a training part which calculates reference data through machine learning, considering tool lifespan based on data that performed machining of good quality among machining load data detected by the edge device; and a detecting part which compares the reference data with the machining load data detected during adaptative control-based machining, and detects tool wear or tool fracture when the machining load data detected during adaptative control-based machining exceeds or falls short of the reference data for a sustained period.

In an embodiment, the detecting part detects tool wear when the machining load data detected during adaptative control-based machining exceeds the upper limit for a duration exceeding the upper limit time, and detects tool fracture when the machining load data falls short of the lower limit for a duration exceeding the lower limit time.

In an embodiment, the device for detecting tool fracture and tool wear in adaptative control of feed rate of the CNC machine-tool further includes a storing part where upper limit, upper limit time, lower limit, and lower limit time calculated by the training part are stored.

In another aspect, there is provided a method for detecting tool fracture and tool wear in adaptative control of feed rate of a CNC machine-tool, including: detecting machining load data of the CNC machine-tool by an edge device; calculating reference data through machine learning, considering tool lifespan based on data that performed machining of good quality among machining load data detected by the edge device; and comparing the reference data with the machining load data detected during adaptative control-based machining, and detecting tool wear or tool fracture when the machining load data detected during adaptative control-based machining exceeds or falls short of the reference data for a sustained period.

In an embodiment, the detecting step includes: detecting tool wear when the machining load data detected during adaptative control-based machining exceeds the upper limit for a duration exceeding the upper limit time; and detecting tool fracture when the machining load data falls short of the lower limit for a duration exceeding the lower limit time.

### Advantageous Effect

According to an embodiment of the present invention, the device and the method for detecting tool fracture and tool wear in adaptative control of a feed rate of a CNC machine-tool can detect tool fracture and tool wear in real time even during the adaptative control of feed rate of the CNC machine-tool by calculating the upper limit, the lower limit, and the reference time through machine learning based on reference data, and comparing the calculated results with the machining load, thereby improving the machining quality of various types of materials and compositions.

### Description of Drawings

FIG. 1 is a block diagram of a device for detecting tool fracture and tool wear in adaptative control of a feed rate of a CNC machine-tool according to an embodiment of the present invention.
FIG. 2 is a graph explaining an operation method during the adaptative control of feed rate of the CNC machine-tool.
FIG. 3 is a graph explaining the detection of tool wear in adaptative control of a feed rate of a CNC machine-tool according to an embodiment of the present invention.
FIG. 4 is a graph explaining the detection of tool fracture in adaptative control of the feed rate of the CNC machine-tool according to an embodiment of the present invention.
FIG. 5 is a flowchart of a method for detecting tool fracture and tool wear in adaptative control of a feed rate of a CNC machine-tool according to an embodiment of the present invention.
FIG. 6 is a flowchart of a tool wear detection process in adaptative control of the feed rate of the CNC machine-tool according to an embodiment of the present invention.
FIG. 7 is a flowchart of a tool fracture detection process in adaptative control of the feed rate of the CNC machine-tool according to an embodiment of the present invention.

### Mode for Invention

Hereinafter, the embodiments of the present invention are described in detail with reference to the accompanying drawings, so that those skilled in the art can readily implement the present invention. The present invention can be implemented in various different forms and is not limited to the embodiments described herein. Parts unrelated to the description have been omitted from the drawings for clarity, and identical or similar components have been denoted with the same reference numerals throughout the specification.

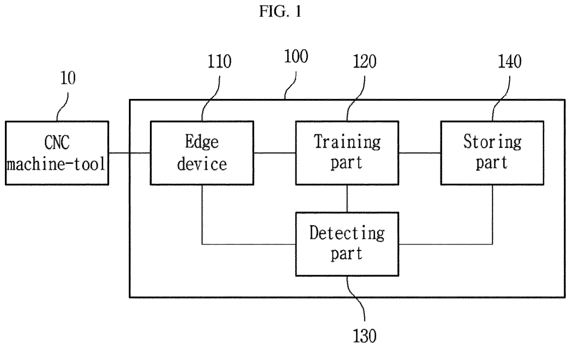

Hereinafter, referring to the attached drawings, a device for detecting tool fracture and tool wear in adaptative control of a feed rate of a CNC machine-tool according to an embodiment of the present invention will be described in more detail. FIG. 1 is a block diagram of a device for detecting tool fracture and tool wear in adaptative control of a feed rate of a CNC machine-tool according to an embodiment of the present invention.

Referring to FIG. 1, the device 100 for detecting tool fracture and tool wear in adaptative control of a feed rate of a CNC machine-tool according to an embodiment of the present invention can include an edge device 110, a training part 120, a detecting part 130, and a storing part 140.

The device 100 for detecting tool fracture and tool wear in adaptative control of a feed rate of the CNC machine-tool is intended for real time detection of tool fracture and tool wear during the adaptative control of feed rate in CNC machining, and can be connected to a CNC machine-tool 10 applicable in adaptative control of feed rate of CNC machining of composite materials. The CNC machine-tool 10 may include a CNC milling machine, CNC lathes, and a machining center.

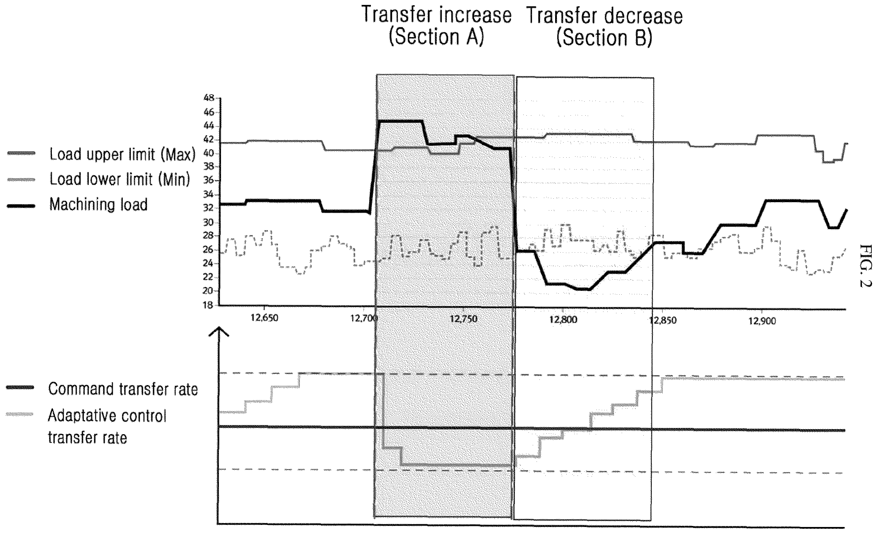

FIG. 2 is a graph explaining an operation method in the adaptative control of feed rate of the CNC machine-tool.

Referring to FIG. 2, the CNC machine-tool 10 can perform adaptative control to decrease the machining load when the current machining load exceeds the upper limit of the machining load (Section A). Thus, the feed rate of adaptative control of the CNC machine-tool 10 may decrease.

Additionally, the CNC machine-tool 10 can perform adaptative control to increase the machining load when the current machining load falls below the lower limit (Section B). Thus, the feed rate of adaptative control of the CNC machine-tool 10 may increase.

As described above, during the adaptative control of feed rate of the CNC machine-tool 10, the feed rate changes according to the current machining load, and thus, the corresponding machining length (or cutting position) also changes. Therefore, tool wear and fracture cannot be detected by a simple comparison of upper or lower limits of time-domain machining load data.

To overcome the above problem, the device 100 for detecting tool fracture and tool wear in the adaptative control of feed rate of CNC machine-tools according to an embodiment of the present invention can generate reference data utilizing machining load data of the tool of CNC machine-tool 10, such as current data of a spindle motor of the CNC machine-tool, and detect tool fracture and tool wear by comparing the reference data with the current machining load data (comparison data). In this instance, the reference data and the comparison data are converted from the time series domain to the machining length domain to enhance the corresponding grade in the comparison of machining load data. Additionally, the reference data may include upper limit, upper limit time, lower limit, and lower limit time for diagnosing tool fracture and tool wear.

The edge device 110 can detect the machining load data for the CNC machine-tool 10. For example, the edge device 110 can detect the current amount or the vibration magnitude of the spindle motor for driving the respective tool of CNC machine-tool 10. In this instance, the edge device 110 may include current sensors and accelerometers.

The training part 120 can calculate reference data through machine learning based on the machining load data detected by the edge device 110. The training part 120 can calculate the reference data considering the tool lifespan based on the machining load data from high-quality machining previously performed. In addition, the training part 120 can calculate reference data for each tool of the CNC machine-tool 10.

The machining load data used in machine learning labels data when machining results performed by the corresponding machining load deem excellent. That is, the machining load data with high-quality machining results are selected from the data generated by previous adaptative control results of CNC machine-tool 10.

Moreover, the tool lifespan refers to the number of times that a specific tool has been used in machining by the previous CNC machine-tool 10. For instance, the tool lifespan may be considered in terms of tool count of the corresponding tool. Here, the tool count represents the number of times that a tool has machined.

In this instance, the training part 120 can calculate upper limit, upper limit time, lower limit, and lower limit time as reference data. For example, the training part 120 can calculate the upper limit and the lower limit by averaging the machining load data the same order of tool count, and then applying a regression formula derived from data mining according to machine learning.

Here, during the adaptative control, since the machining length per unit time changes, the reference data cannot be compared directly with the machining load data detected during the workpiece machining process over time. Therefore, the reference data can be calculated based on the machining length. That is, the reference data is compared with the machining load data detected during the workpiece machining process based on the machining length. Consequently, the training part 120 can calculate the upper limit and the lower limit in terms of machining length (or cutting position).

In this instance, when the upper limit is compared with the machining load data, important matters are the amount by which the upper limit is exceeded and the duration for which the excess is sustained. That is, since the feed rate may change continuously during the adaptative control, tool wear can only be guaranteed when the excess condition of exceeding the upper limit is continuously maintained.

Similarly, when the lower limit is compared with the machining load data, important matters are the amount by which the lower limit is not met and the duration for which the shortfall is sustained. That is, since the feed rate may change continuously during the adaptative control, tool wear can only be guaranteed when the shortage condition is continuously maintained.

Thus, the training part 120 can calculate the duration for which the upper limit is continuously exceeded and the duration for which the lower limit is continuously not met as the upper limit time and the lower limit time, respectively.

The detecting part 130 can compare the machining load data detected during the adaptative control-based machining of the CNC machine-tool 10 with the reference data, and detect tool wear or tool fracture if the time during which the data exceeds or falls short of the reference data persists. In this instance, during the machining process based on the adaptative control, the detecting part 130 can compare the detected machining load data with the reference data according to the machining length.

In more specifically, the detecting part 130 compares the machining load data detected through the edge device 110 during the workpiece machining process based on the adaptative control with the reference data stored in the storing part 140 in real time. That is, the detecting part 130 can detect tool wear when the detected machining load data during the adaptative control-based machining process exceeds the upper limit.

However, as described above, tool wear detection cannot be guaranteed just by only one time comparing machining load data with the upper limit. Therefore, if the detected machining load data during machining exceeds the upper limit and sustains the excess for the duration of the upper limit time, the detecting part 130 can detect tool wear. That is, the detecting part 130 can detect tool wear if the detected machining load data during the adaptative control-based machining process exceeds the upper limit for longer than the specified upper limit time.

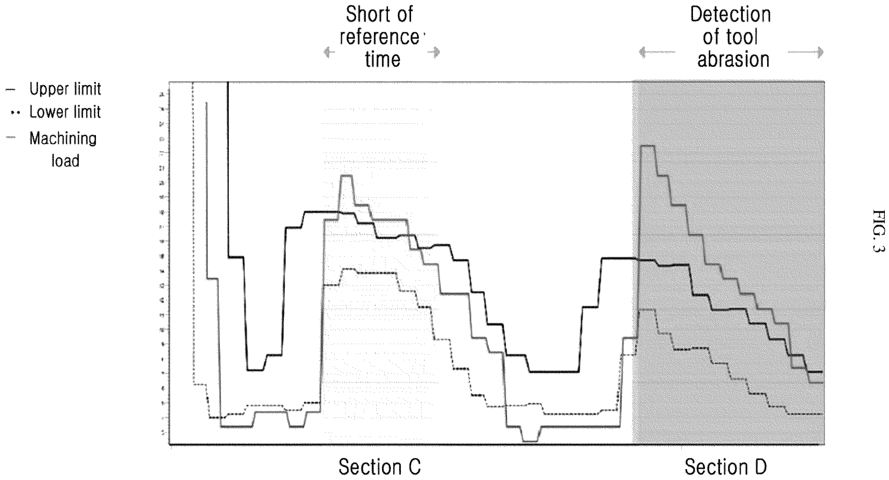

FIG. 3 is a graph explaining the detection of tool wear in the device for detecting tool fracture and tool wear in adaptative control of a feed rate of a CNC machine-tool according to an embodiment of the present invention.

Referring to FIG. 3, the detecting part 130 can determine that there is no tool wear if the machining load momentarily exceeds the upper limit but does not exceed the upper limit for longer than the upper limit time (Section C). That is, if the machining load exceeds the upper limit but does not sustain the excess for longer than the upper limit time, the detecting part 130 does not detect tool wear.

Additionally, the detecting part 130 can detect tool wear only in the case that the machining load exceeds the upper limit and maintains the excess for the duration exceeding the upper limit time (Section D).

The detecting part 130 can detect tool fracture by comparing the machining load data detected by the edge device 110 during the machining process based on the adaptative control of CNC machine-tool 10 with the reference data stored in the storing part 140 in real time, depending on whether the data falls short of the reference data. That is, if the machining load data detected during the adaptative control-based machining falls below the lower limit, feed rate was increased. While the feed rate is increasing on adaptive, the machining load remains below the lower limit. And then, the detecting part 130 can detect tool wear.

However, as described above, tool fracture detection cannot be guaranteed just by only one time the comparison of the machining load data with the lower limit. Therefore, the detecting part 130 can detect tool fracture when the detected machining load data during machining falls below the lower limit and maintains the shortfall for the duration equal to the lower limit time. That is, the detecting part 130 can detect tool fracture when the detected machining load data during the adaptative control-based machining exceeds the lower limit and passes the lower limit time.

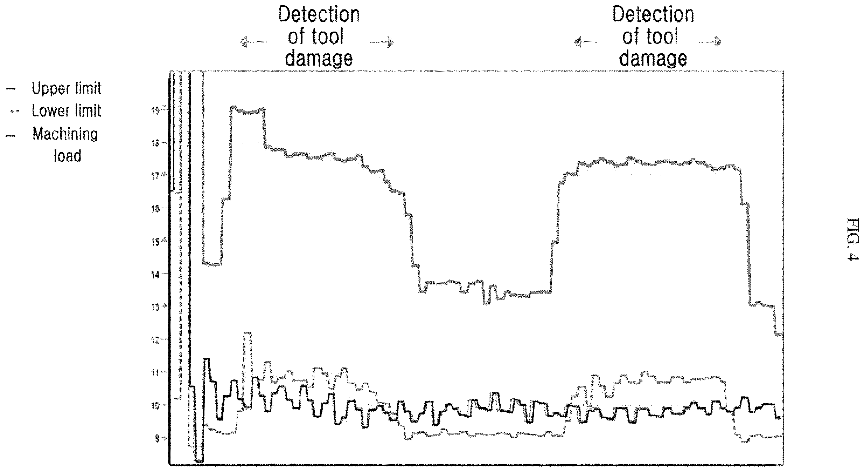

FIG. 4 is a graph explaining the detection of tool fracture in the device for detecting tool fracture and tool wear in adaptative control of the feed rate of the CNC machine-tool according to an embodiment of the present invention.

Referring to FIG. 4, the detecting part 130 can detect tool wear only when the machining load exceeds the lower limit for the duration exceeding the lower limit time.

Similarly to FIG. 3, the detecting part 130 can determine that it is not tool wear if the machining load momentarily falls below the lower limit but does not maintain the condition for longer than the lower limit time. That is, the detecting part 130 does not detect tool fracture when the machining load falls below the lower limit but does not sustain the condition for longer than the lower limit time.

The training part 120 and the detecting part 130 can be equipped in a microprocessor. Alternatively, the training part 120 and the detecting part 130 can be embedded in a controller provided in the CNC machine-tool 10. In this case, the training part 120 and the detecting part 130 can be operated by software programs installed to conduct machine learning of machining load data or to detect tool wear or fracture based on the comparison of machining load data and the reference data.

As a result, the device 100 for detecting tool fracture and tool wear in the adaptative control of feed rate of the CNC machine-tool according to an embodiment of the present invention can detect tool fracture and tool wear in real time during the adaptative control of feed rate, thereby enhancing the machining quality of various types of materials and compositions.

Referring to FIG. 1, the storing part 140 can store information calculated by the training part 120. That is, the storing part 140 can store the upper limit, the upper limit time, the lower limit, and the lower limit time. The storing part 140 can be a memory provided with the training part 120 and the detecting part 130.

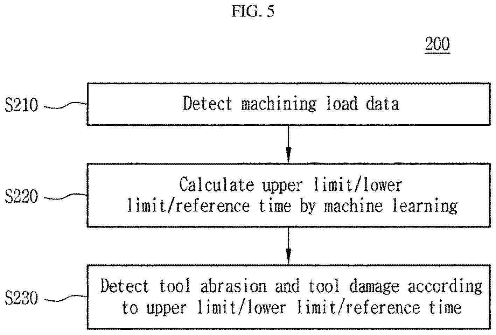

Referring to FIGS. 5 through 7, the method for detecting tool fracture and tool wear in the adaptative control of feed rate of CNC machine-tools according to the present invention is described.

FIG. 5 is a flowchart of a method for detecting tool fracture and tool wear in adaptative control of a feed rate of a CNC machine-tool according to an embodiment of the present invention.

The method 200 for detecting tool fracture and tool wear in the adaptative control of feed rate of the CNC machine-tool includes a step (S210) of detecting machining load data, a step (S220) of calculating reference data by machine learning, and a step of detecting tool wear and fracture based on the reference data.

More specifically, as illustrated in FIG. 5, initially, the device 100 for detecting tool fracture and tool wear detects the machining load data of the CNC machine-tool 10 by the edge device 110 (step S210). At this point, the edge device 110 can detect either the current amount or the vibration magnitude of the spindle motor for driving the corresponding tool of the CNC machine-tool 10.

Next, based on the machining load data detected by the edge device 110, the device 100 for detecting tool fracture and tool wear 100 calculates reference data through machine learning (step S220). In this instance, the device 100 can calculate reference data considering the tool lifespan based on machining load data from high-quality machining, a labeled and approved machining, previously performed. Additionally, the device 100 for detecting tool fracture and tool wear can calculate reference data for each tool of CNC machine-tool 10.

Furthermore, the device 100 for detecting tool fracture and tool wear can calculate the upper limit, the upper limit time, the lower limit, and the lower limit time as reference data. For instance, the device 100 can calculate the upper limit and the lower limit by averaging the machining load data within the tool lifespan or applying a regression formula derived from data mining according to machine learning. In this instance, the device 100 for detecting tool fracture and tool wear can calculate the upper and lower limits with respect to the machining length.

In addition, during the adaptative control of feed rate of the CNC machine-tool, the device 100 for detecting tool fracture and tool wear can calculate the duration for which the upper limit is continuously exceeded and the duration for which the lower limit is continuously not met as the upper limit time and lower limit time, respectively.

Next, during the adaptative control of feed rate, the device 100 for detecting tool fracture and tool wear compares the detected machining load data with the reference data to detect tool wear or tool fracture (step S230). In this instance, if the detected machining load data exceeds or falls short of the reference data for a sustained period, the device 100 can detect tool wear or tool fracture. Here, during the adaptative control-based machining process, the device 100 can compare the detected machining load data with the reference data based on the machining length.

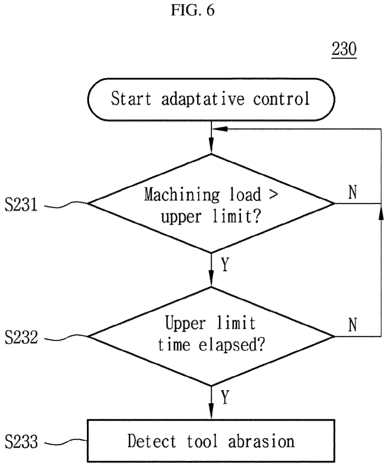

FIG. 6 is a flowchart of a tool wear detection process in the method for detecting tool fracture and tool wear in adaptative control of the feed rate of the CNC machine-tool according to an embodiment of the present invention.

The tool wear detection process (230) includes (S231) determining when the machining load exceeds the upper limit, (S232) evaluating whether the upper limit time has elapsed, and (S233) detecting tool wear.

More specifically, as illustrated in in FIG. 6, initially, the device 100 for detecting tool fracture and tool wear determines whether the machining load exceeds the upper limit (step S231). That is, once the adaptative control of the CNC machining-tool 10 starts, the device 100 for detecting tool fracture and tool wear can compare the detected machining load data during the adaptative control-based machining with the upper limit of the reference data calculated by machine learning.

As a determination result of the step S231, if the machining load does not exceed the upper limit, the device 100 for detecting tool fracture and tool wear continuously monitors the machining load to determine whether the machining load exceeds the upper limit.

As a determination result of the step S231, if the machining load exceeds the upper limit, the device 100 for detecting tool fracture and tool wear determines whether the upper limit time has elapsed (step S232). That is, the device 100 for detecting tool fracture and tool wear can determine whether the detected machining load data exceeds the upper limit and maintains the condition continuously for the duration of the upper limit time.

As a determination result of the step S232, if the upper limit time has not elapsed, the device 100 for detecting tool fracture and tool wear returns to step S231, and continues to determine whether the machining load exceeds the upper limit and the upper limit time has elapsed, as in steps S231 and S232.

As a determination result of the step S232, if the upper limit time has elapsed, i.e., if the machining load exceeds the upper limit for the duration of the upper limit time, the device 100 for detecting tool fracture and tool wear detects tool wear (step S233).

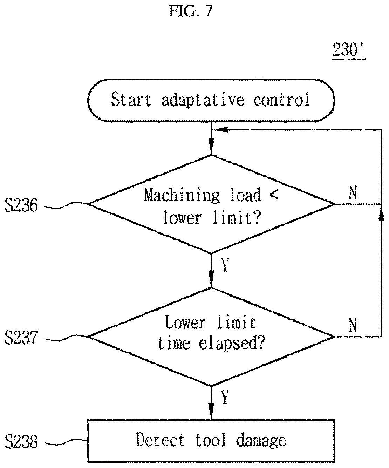

FIG. 7 is a flowchart of a tool fracture detection process in the method for detecting tool fracture and tool wear in adaptative control of the feed rate of the CNC machine-tool according to an embodiment of the present invention.

The tool fracture detection process (230') may include a step (S236) of determining whether the machining load falls below the lower limit, a step (S237) of determining whether the lower limit time has elapsed, and a step (S238) of detecting tool fracture.

More specifically, as illustrated in FIG. 7, the device 100 for detecting tool fracture and tool wear determines whether the machining load falls short of the lower limit (step S236). That is, once the adaptative control of the CNC machining-tool 10 starts, the device 100 for detecting tool fracture and tool wear can compare the detected machining load data during the adaptative control-based machining with the lower limit.

As a determination result of the step S236, if the machining load does not fall short of the lower limit, the device 100 for detecting tool fracture and tool wear continuously monitors the machining load to determine whether the machining load falls short of the lower limit.

As a determination result of the step S236, if the machining load falls short of the lower limit, the device 100 for detecting tool fracture and tool wear determines whether the lower limit time has elapsed (step S237). That is, the device 100 for detecting tool fracture and tool wear can determine whether the detected machining load data falls short of the lower limit and maintains the condition continuously for the duration of the lower limit time.

As a determination result of the step S236, if the lower limit time has not elapsed, the device 100 for detecting tool fracture and tool wear returns to step S236, and continues to determine whether the machining load falls short of the lower limit and the lower limit time has elapsed, as in steps S236 and S237.

As a determination result of the step S236, if the lower limit time has elapsed, i.e., if the machining load falls short of the lower limit for the duration of the lower limit time, the device 100 for detecting tool fracture and tool wear detects tool fracture (step S237).

The methods described above can be implemented by the device 100 for detecting tool fracture and tool wear in adaptative control of feed rate of the CNC machine-tool, as illustrated in FIG. 1, and specifically, can be implemented by software programs, which execute the steps described above. In the above case, the programs can be stored in computer-readable recording media, or transmitted via a computer data signal coupled with a carrier wave in a transmission medium or a communication network.

In this instance, the computer-readable recording media include all types of recording devices in which data readable by a computer system can be stored. For example, the computer-readable recording media may be ROMs, RAMs, CD-ROMs, DVD-ROMs, DVD-RAMs, magnetic tapes, floppy disks, hard disks, and optical data storage devices.

While embodiments of the present invention have been described, it is to be understood that the present invention is not limited to the disclosed embodiments. Those skilled in the art can propose other embodiments which involve modifications, additions, changes, or deletions without departing from the scope, and the modifications, additions, changes, or deletions belong to the category of the spirit of the present invention.
FIG. 1
   10: CNC machine-tool
   110: Edge device
   120: Training part
   130: Detecting part
   140: Storing part
FIG. 2
   Transfer increase (Section A)
   Transfer decrease (Section B)
   Load upper limit (Max)
   Load lower limit (Min)
   Machining load
   Command feed rate
   Adaptative control feed rate
FIG. 3
   Upper limit
   Lower limit
   Machining load
   Short of reference time
   Detection of tool wear
   Section C
   Section D
FIG. 4
   Detection of tool fracture
   Upper limit
   Lower limit
   Machining load
FIG. 7
   S210: Detect machining load data
   S220: Calculate upper limit/lower limit/reference time by machine learning
   S230: Detect tool wear and tool fracture according to upper limit/lower limit/reference time
FIG. 6
   Start adaptative control
   S231: Machining load > upper limit?
   S232: Upper limit time elapsed?
   S233: Detect tool wear
FIG. 7
   Start adaptative control
   S236: Machining load < lower limit?
   S237: Lower limit time elapsed?
   S238: Detect tool fracture

## Claims

1. A device for detecting tool fracture and tool wear in adaptative control of feed rate of a CNC machine-tool, comprising:
an edge device for detecting machining load data of the CNC machine-tool;
a training part which calculates reference data through machine learning, considering tool lifespan based on data that performed machining of good quality among machining load data detected by the edge device; and
a detecting part which compares the reference data with the machining load data detected during adaptative control-based machining, and detects tool wear or tool fracture when the machining load data detected during adaptative control-based machining exceeds or falls short of the reference data for a sustained period.

2. The device according to claim 1, wherein the detecting part detects tool wear when the machining load data detected during adaptative control-based machining exceeds the upper limit for a duration exceeding the upper limit time, and detects tool fracture when the machining load data falls short of the lower limit for a duration exceeding the lower limit time.

3. The device according to claim 1, further comprising:
a storing part where upper limit, upper limit time, lower limit, and lower limit time calculated by the training part are stored.

4. A method for detecting tool fracture and tool wear in adaptative control of feed rate of a CNC machine-tool, comprising:
detecting machining load data of the CNC machine-tool by an edge device;
calculating reference data through machine learning, considering tool lifespan based on data that performed machining of good quality among machining load data detected by the edge device; and
comparing the reference data with the machining load data detected during adaptative control-based machining, and detecting tool wear or tool fracture when the machining load data detected during adaptative control-based machining exceeds or falls short of the reference data for a sustained period.

5. The method according to claim 4, wherein the detecting step comprises:
detecting tool wear when the machining load data detected during adaptative control-based machining exceeds the upper limit for a duration exceeding the upper limit time; and
detecting tool fracture when the machining load data falls short of the lower limit for a duration exceeding the lower limit time.
